# EUROPEAN PATENT SPECIFICATION

(11) **EP 2 623 871 B1**
(45) Date of publication and mention of the grant of the patent: **11.04.2018**
(21) Application number: 13153684.9
(22) Date of filing: 01.02.2013
(51) Int. Cl.: F24D 19/10, F24H 9/20, F24D 17/00

(54) **Household heating device for providing water comprising a control unit configured for providing control signals to a burner**
Haushaltsheizvorrichtung zur Bereitstellung von Wasser mit einer zur Bereitstellung von Steuerungssignalen an einen Brenner konfigurierten Steuerungseinheit
Dispositif de chauffage domestique pour apporter de l'eau comprenant une unité de commande configurée pour fournir des signaux de commande à un brûleur

(30) Priority: 03.02.2012 NL 2008233
(43) Date of publication of application: 07.08.2013
(73) Proprietor: ROBERT BOSCH GMBH, 70442 Stuttgart (DE)
(72) Inventor: Wierenga, Hendrik Jacob Lammert, 8196 KC Welsum (NL); Verdaasdonk, Bart Willem, 7554 MA Beckum (Hengelo OV) (NL)

(56) References cited:
- EP-A2- 2 138 775
- WO-A1-2009/079791
- WO-A1-2011/024311
- WO-A2-2009/144710
- DE-A1- 2 947 969
- US-B1- 6 293 471

## Description

The invention relates to the field of household heating devices for providing heated water, in particularly providing tap water for use by a user also known as Domestic Heat Water (DHW). In particular, domestic heating devices provide DHW in buildings, for example houses. The user uses the DHW for doing the dishes or taking a shower. More in particular, the invention relates to providing a control unit that is configured to provide control signals to a burner, for heating a heat block. The heat block stores and provides heat to water such that the heated water is generated and the user can use the heated water.

A household heating device normally comprises an energy reservoir, preferably a heat block, for storing heat and providing this heat to water. The water, when heated, is supplied to a tap. A user may then use the heated water to for example shower or do the dishes. This heated water is in particularly also known as Domestic Heat Water (DHW).

Normally, a household heating device can operate in different modes. For example, a household heating device can operate in a comfort mode, in which the household heating device heats the heat block. In case of a heated water demand from the user, the heat stored in the heat block is used to heat water for the user.

An example of another mode is an economic mode, wherein the heat block is not heated or heated to a relatively low temperature compared to the temperature of the temperature of the heat block in comfort mode.

It is known from the WO 2011/024311 that a hot water supply apparatus calculates a value representing an ordinary index for the hot water usage of each hot water destination, determines hot water supply whose value is less than a threshold as hot water supply of low ordinary, and determines hot water supply whose value is not less than the threshold as hot water supply of high ordinary. The apparatus also calculates a first boiling-up amount for the hot water supply determined as the hot water supply of low ordinary, and calculates a second boiling-up amount for the hot water supply determined as the hot water supply of high ordinary.

A drawback of these known household heating devices is that when the household heating device is in the comfort mode the heating device spills energy when the user is not demanding heated water.

A further drawback is that when the household heating device is in the economic mode, the user must wait a while to get the demanded heated water of a desired temperature. This is considered as non-comfortable, especially when there is an instant demand for hot water for showering.

It is an object of the present invention to eliminate the abovementioned problems or at least provide an alternative.

In particular it is an object of the present invention to provide a household heating device that is energy efficient while still providing comfort to the user.

The object is achieved by a household heating device according to claim 1 which comprises:
- a heat block for storing heat and providing heat to water;
- a sensor configured for providing a sensor signal representative for the heat provided by the heat block;
- a memory unit configured for storing the sensor signal over time and providing a usage pattern as function of the sensor signal over time, where the usage pattern is representative for the demand of heated water by the user over time, and wherein the usage pattern has time slots;
- a burner for heating the heat block, wherein the burner is configured for receiving control signals;
- a control unit configured for setting a set point of the heat block as function of the usage pattern that is adapted over time as function of the sensor signal, wherein the control unit is further configured to provide the control signals to the burner for controlling the temperature of the heat block to the set point and to determine the demand or usage of hot water for each time slot, where the control unit is configured to set the set point depending on a value of the usage pattern, and wherein the the memory unit is configured to assign the value to a time slot and r update the value according to the received sensor signal.
This household heating device is characterized in that
- the memory unit is configured to adapt the value of the usage pattern over time by decreasing the value of the usage pattern when the user does not demand hot water in the time slot, and increasing the value of the usage pattern when the user does demand hot water in the time slot, and wherein the control unit is configured to set the set point depending on whether the value of the usage pattern is lower or higher than a threshold and
- wherein the control unit is configured to incorporate a time delay or inertia of the setting of the temperature of the set point with respect to the user pattern.
A further aspect of this invention is a method for providing heated water using a household heating device, in particular a household heating device mentioned before, comprising the steps of:
- receiving a sensor signal representative for heat provided by an heat block for heating water;
- storing the sensor signal over time;
- providing values of a usage pattern representing a demand of heated water by a user in time slots of a time period as function of the sensor signal;
- adapting the usage pattern over time;
- setting a set point as function of the usage pattern;
- controlling a burner for controlling the temperature of the heat block to the set point
- characterized by
- adapting the value of the usage pattern over time by decreasing the value of the usage pattern when the user does not demand hot water in the time slot, and increasing the value of the usage pattern when the user does demand hot water in the time slot, and
- setting the set point depending on whether the value of the usage pattern is lower or higher than a threshold
- setting of the temperature of the set point is incorporated with a time delay or inertia with respect to the user pattern.

More particular, this household heating device is suitable for providing water, in particular heated water. The heated water may for example used for showering or doing the dishes. The household heating device further comprises a heat block for storing heat and providing heat to water. By providing stored heat to the water, the water can be heated such that it can be provided to a tap. In particularly the heated water is Domestic Hot Water (DHW). In particular, the water is heated by means of a heat exchanger that transfers heat from the heat block to the water. Preferably, the heat block is internal to a casing of the household heating device. However, alternatively the heat block is external to the casing of the household heating device.

The household heating device further comprises a sensor configured for providing a sensor signal representative for the heat provided by the heat block. The heat provided by the heat block is representative for the usage of heated water by the user. If the user taps heated water, e.g. when taking a shower, the demanded water draws heat from the heat block, which is measured by the sensor. In particular, the sensor is a temperature sensor for measuring a gradient of the temperature of the heat block. The gradient is representative for a flow of heat used for heating the water.

Further particularly, the sensor is a flow sensor for measuring a flow of heat used for heating the water. The flow sensor checks how much heat is drawn from the heat block.

Further particularly, the sensor is a tap sensor, measuring whether the user taps water from the tap or not and/or how much water the user taps water from the tap. The tap sensor may be provided upstream or downstream of the heat block, as long as it is representative for the amount of heat drawn from the heat block.

The household heating device comprises a memory unit configured for storing the sensor signal overtime and providing a usage pattern as function of the sensor signal overtime.

The usage pattern is representative for the demand of heated water by the user over time. It is representative for the demand of heated water being Domestic Hot Water (DHW). DHW is also known as tapping water in contrary to heated water supplied to radiators for heating a building. The usage pattern, has time slots, for example 24 evenly spaced time slots in one day for 7 days a week. In other words the usage pattern is divided in 24 hours per day, 7 days a week. For each time slot, i.e. for each hour, the control unit is configured to determine the demand or usage of hot water. The demand or usage of hot water is for example showering and doing the dishes.

The usage pattern is stored by the memory unit and uses the sensor signal over time to determine whether there is a demand or usage of heated water by the user. The sensor signal is representative for the heat provided by the heat block and for the usage of heated water by the user. When the heat provided by the heat block is changing over time it indicates that the user has a hot water demand. This is stored in the usage pattern for a certain time slot.

The household heating device further comprises a burner, for heating the heat block, wherein the burner is configured for receiving control signals. The burner controls an energy level of the heat block. The burner may for example be a gas burner or an oil burner. The control signals can control the burner by for example turning it on or off or set it at an intermediate power level. The control unit is configured to provide the control signals for modulating the burner.

The household heating device further comprises a control unit configured for setting a set point of the heat block as function of the usage pattern. The set point is set to a desired energy of the heat block. Preferably, the set point is set to a desired temperature. For example, the set point is set to 60 degrees. This corresponds with a temperature of the heat block allowing a relatively fast supply of heated water to the user. In another preference the set point is set to an energy level.

For example, the set point is set to an ambient temperature. This corresponds with a temperature of the heat block that is lower than in the firstly mentioned example and relatively requires less energy. This is the case, because to maintain the temperature of the heat block at an ambient temperature, for example around 20 degrees, requires less energy than maintaining the temperature of the heat block at 60 degrees.

At which desired temperature the control unit eventually sets the set point depends on a value of the usage pattern. The value is assigned to a certain time slot. The time slot is a discrete time interval in a certain time period. The time may for example be a year, a month or a week. If the time period has lapsed a new time period starts. This means that the time period is a recurrent time period that is updated with respect to a previous time period. For example, when the time period is set to a week, every week each value in a time slot is updated with respect to the corresponding time slot of the previous week.

The value, in particular, is divided in multiple discrete values. For example the value can be a real number from 1 to 3. A threshold is defined between a maximum and a minimum of the discrete values. For example, the threshold is set between 2 and 3. The threshold represents an arbiter which decides at which desired temperature the control unit sets the set point dependent on whether the value is lower or higher than the threshold.

The value of the usage pattern, in particular the value for each time slot, is updated according to the received sensor signal.

In particular, the value is set to a value above the threshold when in a particular time slot the user demands for hot water. This is stored by the memory unit. A week later, in the same time slot, the usage pattern provides the value above the threshold to the control unit, which in its turns sets the set point to a desired temperature. This desired temperature is in particular a relatively high temperature, for example 60 degrees.

The usage pattern is adapted over time as function of the sensor signal. Therefore, the usage pattern is learning the pattern of demand by the user. The usage pattern is adapted or updated such that it allows the control unit to set or select the most optimal set point.

The control unit is further configured to provide control signals to the burner for controlling the temperature of the heat block to the set point.

By having a usage pattern that is adapted over time and a control unit that is configured to set the set point of the heat block depending on a value of the usage pattern, a relatively high set point can be selected when there is a high value of the usage pattern and a relatively low set point can be selected when there is a low value of the usage pattern. This results in that in low demand of heated water, the control unit sets the set point to a low temperature and in case of a high demand of heated water, the control unit sets the set point to a high temperature. In the first case, energy efficiency is increased. This has little drawback on the comfort of the user, as the usage pattern indicates that it is not expected that the user demands hot water at that time slot anyways.

In the latter case, a relatively high comfort is available, as the heat block is heated to a relatively high desired temperature, such that it is able to quickly supply heat to the heated water. This solves the problem of the prior art.

In an embodiment of the household heating device according to the invention, the control unit is configured for setting the set point to at least two desired temperatures as function of the usage pattern, wherein the at least two desired temperatures are different.

In particular, the control unit is configured for setting the set point to a first desired temperature or a second desired temperature. Further in particular, the first desired temperature is an ambient temperature and the second desired temperature is 60 degrees. This has as advantage, that when the set point is set to the ambient temperature no or at least less energy is needed for keeping the heat block at this ambient temperature. Furthermore, when the set point is set to 60 degrees, the control unit allows for comfortably, being quickly, providing of heat water to the user.

In a further example, the first desired temperature is slightly above an average ambient temperature, for example 30 degrees.

In an embodiment of the household heating device according to the invention, the memory unit is configured to provide a usage pattern that is continuously adapted as function of the sensor signal.

By continuously adapting the usage pattern it is meant that the usage pattern is always updating the usage pattern independent of a mode of the household heating device.

This has as advantage that when the household heating device is turned on, the control unit learns and updates the usage pattern resulting in a more representative usage pattern.

In a special mode, one may choose to ignore the usage pattern, such that the household heating device works as a state of art household device. However, the usage pattern can still adapt and learn a behaviour of the user. In this case the usage pattern is continuously adapted.

In an embodiment of the household heating device according to the invention, the control unit is further configured for setting an operation mode in a first mode, wherein the control unit is configured to provide a sensor signal to the burner for keeping the heat block at a set point representative to a first desired temperature.

In particular the first mode is a comfort mode, wherein the first desired temperature is such that it allows for a quick and comfortable supply of heat to demanded heated water.

The control unit is further configured for setting the operational mode in a second mode, wherein the control unit is configured to provide a sensor signal to the burner for keeping the heat block at a set point representative to a second desired temperature.

In particular the second mode is an economic mode, wherein the second desired temperature is such that it requires relatively low energy to maintain the heat block at the second desired temperature. In a particular embodiment, the second desired temperature is equal to the ambient temperature or slightly more than ambient temperature.

The second desired temperature is lower than the first desired temperature. This results in that the first desired temperature is relatively high providing comfort to the user and the second desired temperature is relatively low providing an energy efficient mode.

The control unit is further configured for setting the operational mode in a third mode, wherein the control unit is configured for switching between the first mode and the second mode as function of the usage pattern.

In particular the third mode is a smart mode, wherein the control unit switches between a comfort mode and an economic mode depending on the usage pattern.

Having three modes is advantageous, as it allows the user more freedom to choose. When the user for example does not wish to have the household heating device operating in third mode, the control unit is set by the user in the second mode, for example the economic mode. For example, this is the case when the user takes a long holiday. This is more energy efficient.

In another example, the user does not wish to have the household heating device operating in third mode and the control unit is set by the user in the first mode, for example the comfort mode. This for example is the case when the user plans to stay home for a long time. This more comfortable for the user.

A further advantageous embodiment is when the usage pattern is continuously adapted in combination with different operational modes of the household heating device.

Even when the control unit is set to a first mode or a second mode, the usage pattern is continuously adapted or updated, although the control unit does not change the temperature of the set point.

This allows for a more accurate usage pattern that is advantageous when eventually the control unit is set to the third mode, being for example the smart mode.

In an embodiment of the household heating device according to the invention, the control unit is configured to set the set point depending on whether the usage pattern exceeds a threshold.

The usage pattern, in particular, is divided in time slots that are preferably evenly spaced over a time period. This time period may for example be a year, a month or a week. If the time period has lapsed a new time period starts. This means that the time period is a recurrent time period that is updated with respect to a previous time period. For example, when the time period is set to a week, every week each value in a time slot is updated with respect to the corresponding time slot of the previous week.

The time slots are preferably evenly spaced over the time period, for example in hours. A value representative to the user demand is updated for every time slot in a time period with respect to the corresponding time slot of the previous time slot.

The control unit and/or memory unit is configured to adapt the usage pattern over time as function of the energy signal over time.

In a further embodiment, the control unit and/or memory unit is configured to selectively adapt the usage pattern over time as function of the energy signal overtime.

This is advantageous as only when a behaviour change of the user is notified, the usage pattern is adapted or updated. In this case the time slots are not evenly spaced over the time period, but a value is adapted only at a certain point during the time period where the behaviour change is measured. The behaviour change is a change in demand of heated water by the user.

The control unit is configured to set the set point depending on whether the value of the usage pattern exceeds a predefined threshold or not. When the value exceeds the threshold the set point is set to a certain first desired temperature. When the value does not exceed the threshold the set point is not set to the certain first desired temperature or set to a second desired temperature.

In a further embodiment, the control unit is configured to set the set point to multiple desired temperatures depending on whether the usage pattern exceeds respective multiple thresholds.

The control unit therefore sets the set point depending whether one or more of the multiple threshold is exceeded by the usage pattern.

In particular, a value of the usage pattern comprises of multiple discrete values. For example, the multiple discrete value may be any real number from 0 to 3. A threshold may for example be set between 1 and 2. This means that when the usage pattern has a number 1 the control unit sets the set point to a desired temperature. When the usage pattern has a value more than 1, the control unit sets the set point to a different desired temperature.

An initial value of the usage pattern can be set to for example 3. When after a time period the usage pattern is updated a new value is assigned to the usage pattern. An inertia is implemented by adapting the usage pattern by subtracting the value with one when the user does not demands hot water and adding the value with one when the user does demand hot water. In this example, it takes three subsequent time periods for the user not demanding water to drop below the threshold resulting in a change of setting of the set point.

The control unit is therefore configured to incorporate a time delay or inertia of the setting of the temperature of the set point with respect to the usage pattern, or more in particularly the demand of the user.

This has as advantage that accidental deviations of the user are avoided. A further advantage is that the usage pattern keeps representing the user's average behaviour. For example, if for a certain time slot the user takes a shower two out of three times, the control unit ensures maximum comfort (a certain set point) at that time slot. However, the time delay or inertia ensures that only on three times will not result in maximum comfort (setting to said certain set point).

In an embodiment of the household heating device according to the invention, the memory unit is configured to provide a usage pattern wherein a speed of increase or decrease of a value of the usage pattern depends on the sensor signal.

The value increase with +2 when the user demands heated water but decreases -1 when the user does not demand heated water.

In an embodiment of the household heating device according to the invention, the control unit is configured to set the set point to a desired temperature above and near ambient temperature.

Ambient temperature is for example 20 degrees. Above and near ambient temperature is a temperature that still provided heated water to the user, but not relatively much above ambient temperature. For example above and near ambient temperature is 30 degrees.

In particular the temperature above and near ambient temperature lies in the range of 30-50 degrees.

In an embodiment of the household heating device according to the invention, the control unit is configured to set the set point to a desired temperature in the range of 50-80 degrees Celsius, in particularly 60 degrees.

In a preferred embodiment a first desired temperature is 30 degrees which is the temperature above and near ambient temperature and a second desired temperature is 60 degrees which is a temperature for comfortably providing heated water to the user.

In an embodiment of the household heating device according to the invention, the household heating device further comprises a water pump for supplying unheated water to a heat exchanger. The household heating device also comprises a heat exchanger arranged in heat communication with the heat block for heating the unheated water by exchanging heat received from the heat block to the unheated water.

In an embodiment, the control unit is configured to provide the control signals to the burner only for providing Domestic Heat Water to the user. Preferably, the control unit is configured not to provide control signals relating to providing heated water to a radiator for heating a building.

The usage pattern of heated water, being preferably DHW, is measured as it is representative for the user being home. Note, that when there is no demand for heated water, it is not representative for the user not being home. An efficient and comfortable household heating device for providing heated water for heating a building depends on knowing whether a user is home or not. Tapping heated water, being DHW, is not representative for whether a user is home or not. It is merely representative for when a user actually uses or demands DHW. Therefore, the household heating device according to the invention is advantageous for heated water being used as DHW.

Therefore, the heat provided by the heat block is not provided to heat for radiators.

The invention further relates to a method for providing heated water using a household heating device, in particular a household heating device according to one the above embodiments.

Normally, a method for providing hot water comprises the step of operating in one of different modes. For example, a method comprises the step of operating in a comfort mode, in which the household heating device continuously heats an heat block. In case of a heated water demand from the user, the heat stored in the heat block is used to heat water for the user.

An example of another mode is an economic mode, wherein the heat block is not heated or heated at a relatively low temperature compared to the temperature of the temperature of the demanded heated water.

A drawback of these known methods is that when the household heating device is in the comfort mode the heating device spills energy when the user is not demanding heated water.

A further drawback is that when the household heating device is in the economic mode, the user must wait a while to get the demanded heated water of a desired temperature. This is considered as non-comfortable, especially when there is an instant demand for hot water for showering.

It is an object of the present invention to eliminate the abovementioned problems or at least provide an alternative.

In particular it is an object of the present invention to provide a method for providing heated water that is more energy efficient while still being comfortable to the user.

This object is achieved by the method for providing heated water according to claim 10. Preferably, the method is suitable for providing heated tap water or Domestic Heat Water (DHW) to a user.

The method comprises the steps of receiving a sensor signal representative for heat provided by an heat block for heating water and storing the sensor signal over time. The method further comprises the steps of providing a usage pattern as function of the sensor signal over time and adapting the usage pattern over time. The method further comprises the steps of setting a set point as function of the usage pattern and controlling a burner for keeping the temperature of the heat block at the set point.

This is advantageous as depending on the usage pattern, representative for a demand of heater water by a user, a corresponding set point can be chosen. The set point can be set to relatively low desired temperature when the usage pattern indicates that the user recurrently demands little or no heated water. On the other hand, the set point can be set to a relatively high desired temperature when the usage pattern indicates that user recurrently demands much heated water.

This allows on the one hand for an energy efficient household heating device and on the other hand a comfortable supply of heated water to the user. This solves the problems mentioned above.

In an embodiment of the method for providing heated water according to the invention, the set point is set to one of at least two desired temperatures, the at least two desired temperatures being different.

This is advantageous as a first desired temperature can be set corresponding to a usage pattern representing a low demand by the user and a second desired temperature can be set corresponding to a usage pattern representing a high demand by the user. This allows comfort to the user when subsequently demanding heated water by the user and allows for an energy efficient household heating device when the user has a low demand.

In an embodiment of the method for providing heated water according to the invention, the usage pattern over time is continuously adapted.

This is advantageous that independently of an operational mode of the household heating device, the usage pattern is adapted or updated, such that the usage pattern is more accurately representing the demand of heated water by the user.

In an embodiment of the method for providing heated water according to the invention, the set point is set to a desired temperature depending on whether the usage pattern exceeds a threshold.

When a value of the usage pattern exceeds a threshold the set point is set to a certain desired temperature.

In particular, the threshold is defined and set depending on norms set in industry.

This is advantageous as a threshold allows for complying with different norms in industry. In industry several, mostly contradicting, norms must be complied with. For example, an efficiency norm requires a heating device to comply with a certain efficiency and a comfort norm requires a heating device to comply with a certain level of comfort. By setting the threshold both norms can be complied with simply by choosing the threshold depending on the actual values of the norms.

In an embodiment of the method for providing heated water according to the invention, a speed of increase or decrease of a value of the usage pattern depends on the sensor signal.

In an embodiment of the method for providing heated water according to the invention, the set point is set to a desired temperature corresponding with a temperature above and near ambient temperature.

This is advantageous as setting to the ambient temperature results in an optimal efficiency in case when there is no demand for hot water by the user. It requires little heating to control the temperature of the heat block above and near the ambient temperature.

In an embodiment of the method for providing heated water according to the invention, the set point is set to a desired temperature corresponding with 60 degrees Celsius.

This is advantageous as 60 degrees allows for a quick and comfortable supply of heat to the demanded heated water.

These and other aspects of the invention will be more readily appreciated as the same becomes better understood by reference to the following detailed description and considered in connection with the accompanying drawings in which like reference symbols designate like parts.
Figure 1 shows a household heating device according to an embodiment of the invention;
Figure 2 shows a usage pattern according to an embodiment of the invention.

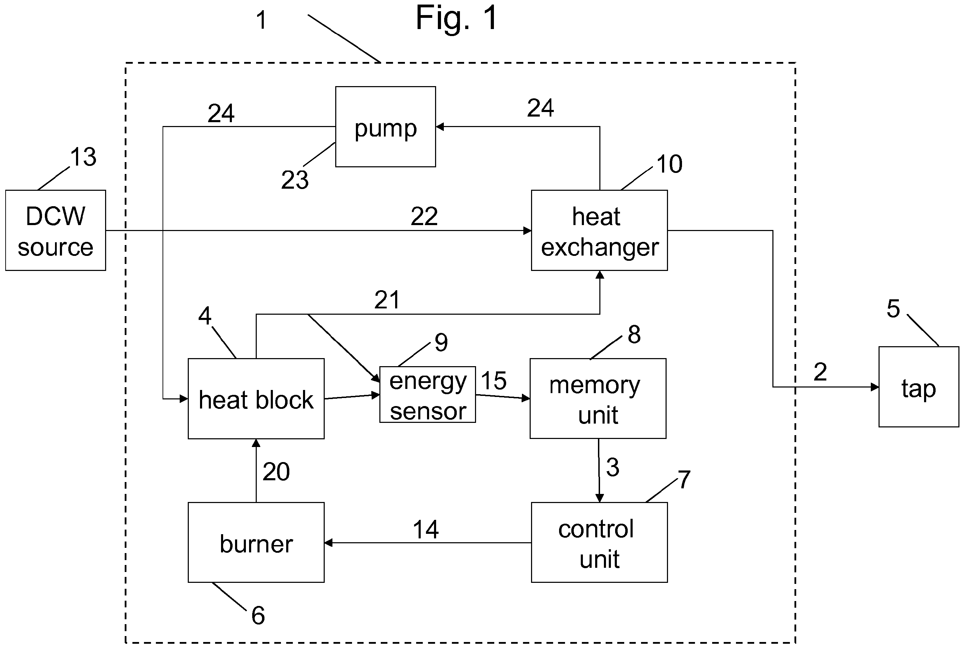

Figure 1 shows a schematic picture of a household heating device 1 for providing heated water 2. The heated water 2 is supplied to a tap 5 that is demanded by a user A. Here the heated water 2 is Domestic Hot Water (DHW). The user may for example use the heated water 2 for doing the dishes or taking a shower. Further shown is a heat block 4 for storing heat and providing supply heat 21 to the heated water 2. Here, the supply heat 21 is provided or transferred to the heated water 2 by means of a heat exchanger 10. Cold water 22, here in particularly Domestic Cold Water (DCW), is supplied from a Domestic Cold Water source 13 to the heat exchanger 10. The heat exchanger 10 transfers energy from the supply heat 21 to the cold water 22. The cold water 22 is heated into the heated water 22. The DHW and DCW are also known a sanitary water. The heat block 4 may alternatively be a heat plate. The supply heat 21 may be provided to the heat exchanger 10 in the form of convection and/or conduction. In an alternative, the Domestic Heat Water is directly supplied from the heat block 4 and no heat exchanger 10 is used.

Further shown is that the supply heat 21 that enters the heat exchanger 10 is cooled and leaves the heat exchanger 10. Return heat 24 eventually is returned to the heat block 4. The circulation of supply heat 21 and return heat 24 is provided by a pump 23.

Further shown is a sensor 9 configured for providing a sensor signal 15 representative for a level of the supply heat 21 provided by the heat block 4. The sensor 9 may for example be a temperature sensor and/or a flow meter.

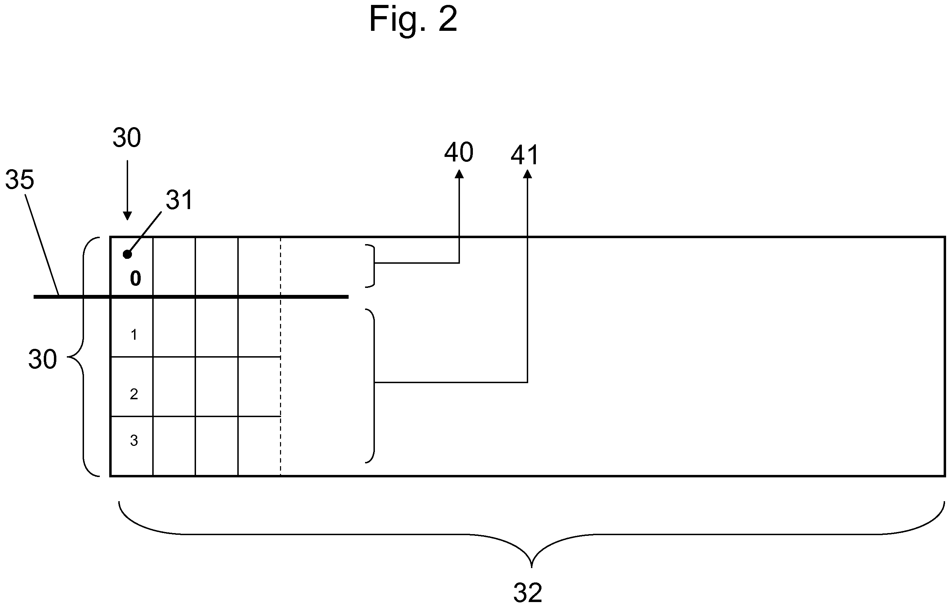

The household heating device 1 also comprises a memory unit 8 configured for storing the sensor signal 15 over time and providing a usage pattern 3 as function of the sensor signal 15 over time. The usage pattern 3 represents a demand of heated water 2 by the user A over a time period 32, further shown in figure 2. When the time period 32 expires and a new time period 32 starts, the usage pattern 3 is updated to represent an average demand of heated water 2 by the user A.

Further shown in figure 1 is that the heat block 4 is arranged in the household heating device 1. However, alternatively the heat block 4 may be physically located outside a casing of the household heating device 1. The heat block 4 is arranged in heat communication with the heat exchanger 10.

Further shown is a a burner 6 for providing reservoir energy 20 to the heat block 4. Reservoir energy 20 may for example be provided by means of conduction and/or convection.

The burner 6 is configured for receiving control signals 14. The control signals 14 for example are representative for a turning on or turning off of the burner 6. This way the burner 6 may be controlled such that the heat block 4 reaches a desired temperature.

A control unit 7 is configured for setting a set point of the heat block 4. The set point is set to the desired temperature. The setting of the set point is a function of the usage pattern 3. The usage pattern is adapted over time as function of the sensor signal 15.

The control unit 7 is further configured to provide the control signals 14 to the burner 6 for controlling the temperature of the heat block 4 to the set point.

By making the set point depending on the usage pattern 3 an on the one hand energy efficient and on the other hand a comfortable household heating device 1 is acquired. When the control unit is configured to set the set point to a relatively low desired temperature the household heating device 1 is energy efficient as less energy is needed to keep the heat block 4 at this low desired temperature. When the control unit is configured to set the set point to a relatively high desired temperature, the household heating device 1 is comfortable for the user A as the heat block 4 is able to provide supply heat 21 with a higher temperature, such that demanded heated water 2 can be supplied more quickly to the user A.

Figure 2 shows a schematic picture of a usage pattern 3 of a certain time period 32. The time period 32 in this embodiment is equal to a week, comprising seven days and 24 hours per day. The usage pattern 3 is evenly divided in time slots 30 with a length of 1 hour. This means that the usage pattern 3 for one time period 32 is divided in 24 times 7 equals 168 time slots each time slot 30 representing one hour. The time period 32 can alternatively be set to two weeks or one month or any other length of time.

Every time slot 30 can be assigned with a value 31. This particularly is a discrete value being any real number between a maximum value and a minimum value. In this example the time slot 30, represented by a vertical row, can represent one of the values 1, 2, 3 or 4. Here, the value 31 of the time slot 30 is 0, indicated by a bold number 0. Other values 31 can be 1, 2 or 3. Therefore, the value 31 can be set at four different values.

Also indicated is a threshold 35. Here, the threshold 35 is set between 0 and 1. This means that when the value 31 is lower than 1, the set point is set to a first desired temperature 40. When the value 31 is higher or equal to 1, the set point is set to a second desired temperature 41. The first desired temperature 40 is for example equal to a temperature slightly above ambient temperature, being for example 30 degrees. The second desired temperature 41 is for example a higher temperature, being for example 60 degrees.

The setting of the set point to a respective desired temperature 40, 41 is performed by the control unit 7.

The household heating device and the method for providing heated water according to the invention are not limited to the described embodiments. Any combination of the described embodiments is possible and foreseen.

In an embodiment of the household heating device, the control unit is configured to set the set point to a first desired temperature ranging from 30-50.

In an embodiment of the household heating device, the control unit is configured to set the set point to a second desired temperature ranging from 50-80.

In an embodiment of the household heating device, the control unit is configured to set the set point to a desired temperature corresponding to more than 30 degrees Celsius.

In an embodiment of the household heating device, the control unit is configured to set the set point to a desired temperature between 30 degrees Celsius and 80 degrees Celsius.

In an embodiment of the household heating device, the control unit is configured to set the set point to a desired energy level.

This energy level represents a level of energy at which the heat block must be maintained. The desired energy level may be expressed in a desired temperature, but may also be expressed in a desired amount of preheated water, or a desired power.

In an embodiment of the household heating device, the household heating device is comprises a heated water supply to a tap as well as a radiator. The control unit according to the invention is configured to provide the control signals only to control a temperature of the heated water that is supplied to the tap.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriate detailed structure. Further, the terms and phrases used herein are not intended to be limiting, but rather, to provide an understandable description of the invention.

The terms "a" or "an", as used herein, are defined as one or more than one. The term "multiple", as used herein, is defined as two or more than two. The term "another", as used herein, is defined as at least a second or more. The terms "including" and/or "having", as used herein, are defined as comprising (i.e. open language, not excluding other elements or steps). Any reference signs in the claims should not be construed as limiting the scope of the claims of the invention.

## Claims

1. Household heating device (1) for providing water (2) comprising:
- a heat block (4) for storing heat (21) and providing heat (21) to water (2);
- a sensor (9) configured for providing a sensor signal (15) representative for the heat (21) provided by the heat block (4);
- a memory unit (8) configured for storing the sensor signal (15) over time and providing a usage pattern (3) as function of the sensor signal (15) over time, where the usage pattern is representative for the demand of heated water by the user over time, and wherein the usage pattern has time slots;
- a burner (6) for heating the heat block (4), wherein the burner (6) is configured for receiving control signals (14);
- a control unit (7) configured for setting a set point of the heat block (4) as function of the usage pattern (3) that is adapted over time as function of the sensor signal (15), wherein the control unit (7) is further configured to provide the control signals (14) to the burner (6) for controlling the temperature of the heat block (4) to the set point and to determine the demand or usage of hot water for each time slot, where the control unit (7) is further configured to set the set point depending on a value of the usage pattern, and wherein the memory unit (8) is configured to assign the value to a time slot and update the value according to the received sensor signal (15), wherein
- the memory unit (8) is configured to adapt the value of the usage pattern over time by decreasing the value of the usage pattern (3) when the user does not demand hot water in the time slot, and increasing the value of the usage pattern (3) when the user does demand hot water in the time slot, and wherein the control unit (7) is configured to set the set point depending on whether the value of the usage pattern (3) is lower or higher than a threshold and
- wherein the control unit (7) is configured to incorporate a time delay or inertia of the setting of the temperature of the set point with respect to the user pattern (3).

2. Household heating device (1) for providing water (2), according to claim 1, wherein the control unit (7) is configured for setting the set point to at least two desired temperatures as function of the usage pattern (3), wherein the at least two desired temperatures are different.

3. Household heating device (1) for providing water (2) according to one of the preceding claims, wherein the memory unit (8) is configured to provide the usage pattern (3) wherein a speed of increase or decrease of a value of the usage pattern (3) depends on the sensor signal (15).

4. Household heating device (1) for providing water (2) according to one of the preceding claims, wherein the control unit (7) is configured to set the set point to a desired temperature above and near ambient temperature, in particularly ranging from 30-50 degrees Celsius or wherein the control unit (7) is configured to set the set point to a desired temperature ranging from 50-80 degrees Celsius.

5. Household heating device (1) for providing water (2) according to one of the preceding claims, further comprising:
- a water pump for supplying unheated water (22) to a heat exchanger;
- a heat exchanger arranged in heat communication with the heat block (4) for heating the unheated water (22) by exchanging heat (21) received from the heat block (4) to the unheated water (22).

6. Household heating device (1) for providing water (2) according to one of the preceding claims, wherein the control unit (7) is further configured for setting an operational mode in:
- a first mode, wherein the control unit (7) is configured to provide a sensor signal (15) to the burner (6) for keeping the heat block (4) at a set point representative to a first desired temperature;
- a second mode, wherein the control unit (7) is configured to provide a sensor signal (15) to the burner (6) for keeping the heat block (4) at a set point representative to a second desired temperature, wherein the second desired temperature is lower than the first desired temperature;
- a third mode, wherein the control unit (7) is configured for switching between the first mode and the second mode as function of the usage pattern (3).

7. Method for providing heated water (2) using a household heating device (1) according to one of the claims 1-8, comprising the steps of:
- receiving a sensor signal (15) representative for heat (21) provided by a heat block (4) for heating water;
- storing the sensor signal (15) over time;
- providing values of a usage pattern (3) representing a demand of heated water by a user in time slots of a time period as function of the sensor signal (15) ;
- adapting the usage pattern (3) over time;
- setting a set point as function of the usage pattern (3);
- controlling a burner (6) for controlling the temperature of the heat block (4) to the set point
- determining the demand or usage for each time slot and setting the set point depending on a value of the usage pattern (3) and assigning the value to a time slot and updating the value according to the received sensor signal (15)
- adapting the value of the usage pattern over time by decreasing the value of the usage pattern (3) when the user does not demand hot water in the time slot, and increasing the value of the usage pattern (3) when the user does demand hot water in the time slot, and
- setting the set point depending on whether the value of the usage pattern (3) is lower or higher than a threshold
- setting of the temperature of the set point is incorporated with a time delay or inertia with respect to the user pattern (3).

8. Method for providing heated water (2) according to claim 9, wherein the set point is set to one of at least two desired temperatures, the at least two desired temperatures being different.

9. Method for providing heated water (2) according to one of claims 9-11, wherein a speed of increase or decrease of a value of the usage pattern (3) depends on the sensor signal (15).

10. Method for providing heated water (2) according to one of claims 9-13, wherein the set point is set to a desired temperature above and near ambient temperature, in particularly ranging from 30-50 degrees Celsius or wherein the set point is set to a desired temperature ranging from 60 to 80 degrees Celsius.

## Patentansprüche

1. Haushaltsheizvorrichtung (1) zum Bereitstellen von Wasser (2), die Folgendes umfasst:
- einen Wärmeblock (4) zum Speichern von Wärme (21) und zum Bereitstellen von Wärme (21) für Wasser (2);
- einen Sensor (9), der konfiguriert ist, ein Sensorsignal (15) bereitzustellen, das die Wärme (21) repräsentiert, die durch den Wärmeblock (4) bereitgestellt wird;
- eine Speichereinheit (8), die konfiguriert ist, den zeitlichen Verlauf des Sensorsignals (15) zu speichern und ein Nutzungsmuster (3) in Abhängigkeit von dem zeitlichen Verlauf des Sensorsignals (15) bereitzustellen, wobei das Nutzungsmuster den zeitlichen Verlauf des Bedarfs an erhitztem Wasser seitens des Benutzers repräsentiert, und wobei das Nutzungsmuster Zeitfenster aufweist;
- einen Brenner (6) zum Erhitzen des Wärmeblocks (4), wobei der Brenner (6) konfiguriert ist, Steuersignale (14) zu erhalten;
- eine Steuereinheit (7), die konfiguriert ist, einen Sollwert des Wärmeblocks (4) in Abhängigkeit von dem Nutzungsmuster (3) einzustellen, dessen zeitlicher Verlauf in Abhängigkeit vom Sensorsignal (15) angepasst wird, wobei die Steuereinheit (7) ferner konfiguriert ist, die Steuersignale (14) für den Brenner (6) zum Steuern der Temperatur des Wärmeblocks (4) auf den Sollwert bereitzustellen und den Bedarf oder die Nutzung von heißem Wasser für jedes Zeitfenster zu bestimmen, wobei die Steuereinheit (7) ferner konfiguriert ist, den Sollwert in Abhängigkeit von einem Wert des Nutzungsmusters einzustellen, und wobei die Speichereinheit (8) konfiguriert ist, den Wert einem Zeitfenster zuzuweisen und den Wert in Übereinstimmung mit dem empfangenen Sensorsignal (15) zu aktualisieren,
- wobei die Speichereinheit (8) konfiguriert ist, den zeitlichen Verlauf des Werts des Nutzungsmusters anzupassen, indem der Wert des Nutzungsmusters (3) verringert wird, wenn der Benutzer in dem Zeitfenster kein heißes Wasser anfordert, und indem der Wert des Nutzungsmusters (3) erhöht wird, wenn der Benutzer in dem Zeitfenster heißes Wasser anfordert, und wobei die Steuereinheit (7) konfiguriert ist, den Sollwert in Abhängigkeit davon einzustellen, ob der Wert des Nutzungsmusters (3) niedriger oder höher als ein Schwellenwert ist, und
- wobei die Steuereinheit (7) so konfiguriert ist, dass sie eine Zeitverzögerung oder Trägheit bei der Einstellung der Temperatur des Sollwerts in Bezug auf das Nutzungsmuster (3) enthält.

2. Haushaltsheizvorrichtung (1) zum Bereitstellen von Wasser (2) nach Anspruch 1, wobei die Steuereinheit (7) konfiguriert ist, den Sollwert auf wenigstens zwei gewünschte Temperaturen in Abhängigkeit von dem Nutzungsmuster (3) einzustellen, wobei die wenigstens zwei gewünschten Temperaturen unterschiedlich sind.

3. Haushaltsheizvorrichtung (1) zum Bereitstellen von Wasser (2) nach einem der vorhergehenden Ansprüche, wobei die Speichereinheit (8) konfiguriert ist, das Nutzungsmuster (3) bereitzustellen, wobei eine Geschwindigkeit einer Erhöhung oder Absenkung eines Werts des Nutzungsmusters (3) von dem Sensorsignal (15) abhängt.

4. Haushaltsheizvorrichtung (1) zum Bereitstellen von Wasser (2) nach einem der vorhergehenden Ansprüche, wobei die Steuereinheit (7) konfiguriert ist, den Sollwert auf eine gewünschte Temperatur über und auf der Umgebungstemperatur einzustellen, insbesondere im Bereich von 30-50 Grad Celsius, oder wobei die Steuereinheit (7) konfiguriert ist, den Sollwert auf eine gewünschte Temperatur im Bereich von 50-80 Grad Celsius einzustellen.

5. Haushaltsheizvorrichtung (1) zum Bereitstellen von Wasser (2) nach einem der vorhergehenden Ansprüche, die ferner Folgendes umfasst:
- eine Wasserpumpe zum Zuführen von nicht erhitztem Wasser (22) zu einem Wärmetauscher;
- einen Wärmetauscher, der in Wärmekommunikation mit dem Wärmeblock (4) zum Erhitzen des nicht erhitzten Wassers (22) durch Tauschen von Wärme (21), die von dem Wärmeblock (4) empfangen wird, mit dem nicht erhitzten Wasser (22) angeordnet ist.

6. Haushaltsheizvorrichtung (1) zum Bereitstellen von Wasser (2) nach einem der vorhergehenden Ansprüche, wobei die Steuereinheit (7) ferner konfiguriert ist, eine der folgenden Betriebsarten einzustellen:
- eine erste Betriebsart, bei der die Steuereinheit (7) konfiguriert ist, ein Sensorsignal (15) für den Brenner (6) bereitzustellen, um den Wärmeblock (4) auf einem Sollwert zu halten, der eine erste gewünschte Temperatur repräsentiert;
- eine zweite Betriebsart, bei der die Steuereinheit (7) konfiguriert ist, ein Sensorsignal (15) für den Brenner (6) bereitzustellen, um den Wärmeblock (4) auf einem Sollwert zu halten, der eine zweite gewünschte Temperatur repräsentiert, wobei die zweite gewünschte Temperatur niedriger als die erste gewünschte Temperatur ist;
- eine dritte Betriebsart, bei der die Steuereinheit (7) zum Umschalten zwischen der ersten Betriebsart und der zweiten Betriebsart in Abhängigkeit von dem Nutzungsmuster (3) konfiguriert ist.

7. Verfahren zum Bereitstellen von erhitztem Wasser (2) unter Verwendung einer Haushaltsheizvorrichtung (1) nach einem der Ansprüche 1-8, wobei das Verfahren die folgenden Schritte umfasst:
- Empfangen eines Sensorsignals (15), das die Wärme (21) repräsentiert, die durch einen Wärmeblock (4) zum Erhitzen von Wasser bereitgestellt wird;
- Speichern des zeitlichen Verlaufs des Sensorsignals (15);
- Bereitstellen von Werten eines Nutzungsmusters (3), das einen Bedarf an erhitztem Wasser seitens eines Benutzers in Zeitfenstern einer Zeitspanne in Abhängigkeit von dem Sensorsignal (15) repräsentiert;
- Anpassen des zeitlichen Verlaufs des Nutzungsmusters (3);
- Einstellen eines Sollwerts in Abhängigkeit von dem Nutzungsmuster (3);
- Steuern eines Brenners (6) zum Steuern der Temperatur des Wärmeblocks (4) auf den Sollwert;
- Bestimmen des Bedarfs oder der Nutzung für jedes Zeitfenster und Einstellen des Sollwerts in Abhängigkeit von einem Wert des Nutzungsmusters (3), und Zuweisen des Werts zu einem Zeitfenster und Aktualisieren des Werts in Übereinstimmung mit dem empfangenen Sensorsignal (15),
- Anpassen des zeitlichen Verlaufs des Werts des Nutzungsmusters, indem der Wert des Nutzungsmusters (3) verringert wird, wenn der Benutzer in dem Zeitfenster kein heißes Wasser anfordert, und indem der Wert des Nutzungsmusters (3) erhöht wird, wenn der Benutzer in dem Zeitfenster heißes Wasser anfordert, und
- Einstellen des Sollwerts in Abhängigkeit davon, ob der Wert des Nutzungsmusters (3) niedriger oder höher als ein Schwellenwert ist,
- Einstellen der Temperatur des Sollwerts, wobei eine Zeitverzögerung oder eine Trägheit in Bezug auf das Nutzungsmuster (3) enthalten ist.

8. Verfahren zum Bereitstellen von erhitztem Wasser (2) nach Anspruch 9, wobei der Sollwert auf eine von wenigstens zwei gewünschten Temperaturen eingestellt wird, wobei die wenigstens zwei gewünschten Temperaturen unterschiedlich sind.

9. Verfahren zum Bereitstellen von erhitztem Wasser (2) nach einem der Ansprüche 9-11, wobei eine Geschwindigkeit einer Erhöhung oder Absenkung eines Werts des Nutzungsmusters (3) von dem Sensorsignal (15) abhängt.

10. Verfahren zum Bereitstellen von erhitztem Wasser (2) nach einem der Ansprüche 9-13, wobei der Sollwert auf eine gewünschte Temperatur über und bei der Umgebungstemperatur eingestellt wird, insbesondere im Bereich von 30-50 Grad Celsius, oder wobei der Sollwert auf eine gewünschte Temperatur im Bereich von 60 bis 80 Grad Celsius eingestellt wird.

## Revendications

1. Appareil ménager chauffant (1) destiné à fournir de l'eau (2) comprenant :
- un bloc thermique (4) destiné à stocker de la chaleur (21) et fournir la chaleur (21) à l'eau (2) ;
- un capteur (9) configuré pour fournir un signal de capteur (15) représentatif de la chaleur (21) fournie par le bloc thermique (4) ;
- une unité de mémoire (8) configurée pour stocker le signal de capteur (15) dans le temps et fournir un motif d'utilisation (3) en fonction du signal de capteur (15) dans le temps, le motif d'utilisation étant représentatif de la demande d'eau chauffée par l'utilisateur dans le temps, et le motif d'utilisation ayant des créneaux temporels ;
- un brûleur (6) destiné à chauffer le bloc thermique (4), le brûleur (6) étant configuré pour recevoir des signaux de commande (14) ;
- une unité de commande (7) configurée pour régler une consigne du bloc thermique (4) en fonction du motif d'utilisation (3) qui est adapté dans le temps en fonction du signal de capteur (15), l'unité de commande (7) étant également configurée pour fournir les signaux de commande (14) au brûleur (6) pour réguler la température du bloc thermique (4) à la consigne et pour déterminer la demande ou l'utilisation d'eau chaude pour chaque créneau temporel, l'unité de commande (7) étant également configurée pour régler la consigne en fonction d'une valeur du motif d'utilisation, et l'unité de mémoire (8) étant configurée pour affecter la valeur à un créneau temporel et actualiser la valeur en fonction du signal de capteur reçu (15),
dans lequel
- l'unité de mémoire (8) est configurée pour adapter la valeur du motif d'utilisation dans le temps en diminuant la valeur du motif d'utilisation (3) quand l'utilisateur ne demande pas d'eau chaude dans le créneau temporel, et en augmentant la valeur du motif d'utilisation (3) quand l'utilisateur demande de l'eau chaude dans le créneau temporel, et dans lequel l'unité de commande (7) est configurée pour régler la consigne selon que la valeur du motif d'utilisation (3) est inférieure ou supérieure à un seuil et
- dans lequel l'unité de commande (7) est configurée pour incorporer un délai ou une inertie du réglage de la température de la consigne par rapport au motif de l'utilisateur (3).

2. Appareil ménager chauffant (1) destiné à fournir de l'eau (2), selon la revendication 1, dans lequel l'unité de commande (7) est configurée pour régler la consigne à au moins deux températures souhaitées en fonction du motif d'utilisation (3), les au moins deux températures souhaitées étant différentes.

3. Appareil ménager chauffant (1) destiné à fournir de l'eau (2) selon une des revendications précédentes, dans lequel l'unité de mémoire (8) est configurée pour fournir le motif d'utilisation (3) dans lequel une vitesse d'augmentation ou de diminution d'une valeur du motif d'utilisation (3) dépend du signal de capteur (15).

4. Appareil ménager chauffant (1) destiné à fournir de l'eau (2) selon une des revendications précédentes, dans lequel l'unité de commande (7) est configurée pour régler la consigne à une température souhaitée supérieure à et proche de la température ambiante, en particulier allant de 30 à 50 degrés Celsius, ou dans lequel l'unité de commande (7) est configurée pour régler la consigne à une température souhaitée allant de 50 à 80 degrés Celsius.

5. Appareil ménager chauffant (1) destiné à fournir de l'eau (2) selon une des revendications précédentes, comprenant en outre :
- une pompe à eau destinée à fournir de l'eau non chauffée (22) à un échangeur de chaleur ;
- un échangeur de chaleur disposé en communication thermique avec le bloc thermique (4) pour chauffer l'eau non chauffée (22) en échangeant la chaleur (21) reçue du bloc thermique (4) avec l'eau non chauffée (22).

6. Appareil ménager chauffant (1) destiné à fournir de l'eau (2) selon une des revendications précédentes, dans lequel l'unité de commande (7) est également configurée pour régler un mode de fonctionnement dans :
- un premier mode, dans lequel l'unité de commande (7) est configurée pour fournir un signal de capteur (15) au brûleur (6) pour maintenir le bloc thermique (4) à une consigne représentative d'une première température souhaitée ;
- un deuxième mode, dans lequel l'unité de commande (7) est configurée pour fournir un signal de capteur (15) au brûleur (6) pour maintenir le bloc thermique (4) à une consigne représentative d'une deuxième température souhaitée, la deuxième température souhaitée étant inférieure à la première température souhaitée ;
- un troisième mode, dans lequel l'unité de commande (7) est configurée pour basculer entre le premier mode et le deuxième mode en fonction du motif d'utilisation (3).

7. Procédé destiné à fournir de l'eau chauffée (2) au moyen d'un appareil ménager chauffant (1) selon une des revendications 1 à 8, comprenant les étapes consistant à :
- recevoir un signal de capteur (15) représentatif de la chaleur (21) fournie par un bloc thermique (4) destiné à chauffer de l'eau ;
- stocker le signal de capteur (15) dans le temps ;
- fournir des valeurs d'un motif d'utilisation (3) représentant une demande d'eau chauffée par un utilisateur dans des créneaux temporels d'un laps de temps en fonction du signal de capteur (15) ;
- adapter le motif d'utilisation (3) dans le temps ;
- régler une consigne en fonction du motif d'utilisation (3) ;
- contrôler un brûleur (6) pour réguler la température du bloc thermique (4) à la consigne
- déterminer la demande ou l'utilisation pour chaque créneau temporel et régler la consigne en fonction d'une valeur du motif d'utilisation (3) et affecter la valeur à un créneau temporel et actualiser la valeur en fonction du signal de capteur reçu (15)
- adapter la valeur du motif d'utilisation dans le temps en diminuant la valeur du motif d'utilisation (3) quand l'utilisateur ne demande pas d'eau chaude dans le créneau temporel, et en augmentant la valeur du motif d'utilisation (3) quand l'utilisateur demande de l'eau chaude dans le créneau temporel, et
- régler la consigne selon que la valeur du motif d'utilisation (3) est inférieure ou supérieure à un seuil
- le réglage de la température de la consigne est incorporé avec un délai ou une inertie par rapport au motif de l'utilisateur (3).

8. Procédé destiné à fournir de l'eau chauffée (2) selon la revendication 9, dans lequel la consigne est réglée à une d'au moins deux températures souhaitées, les au moins deux températures souhaitées étant différentes.

9. Procédé destiné à fournir de l'eau chauffée (2) selon une des revendications 9 à 11, dans lequel une vitesse d'augmentation ou de diminution d'une valeur du motif d'utilisation (3) dépend du signal de capteur (15).

10. Procédé destiné à fournir de l'eau chauffée (2) selon une des revendications 9 à 13, dans lequel la consigne es réglée à une température souhaitée supérieure à et proche de la température ambiante, en particulier allant de 30 à 50 degrés Celsius, ou dans lequel la consigne est réglée à une température souhaitée allant de 60 à 80 degrés Celsius.
